# EUROPEAN PATENT APPLICATION

(11) **EP 4 421 099 A1**
(43) Date of publication of application: **28.08.2024**
(21) Application number: 22883660.7
(22) Date of filing: 21.10.2022
(51) Int. Cl.: C08F 8/06, C08F 20/00, C09K 3/00

(54) **POLYMER AND PRODUCTION METHOD THEREFOR**

(30) Priority: 22.10.2021 JP 2021172812
(71) Applicant: University of Fukui, Fukui-shi, Fukui 910-8507 (JP); Maruzen Petrochemical Co., Ltd., Tokyo 104-8502 (JP)
(72) Inventor: SUGIHARA, Shinji, Fukui-shi, Fukui 910-8507 (JP); OGAWA, Hirofumi, Ichihara-shi, Chiba 290-8503 (JP)
(74) Representative: Wächtershäuser & Hartz Patentanwaltspartnerschaft mbB
(86) International application number: PCT/JP2022/039225
(87) International publication number: WO 2023/068357

(57) **Abstract**

Provided is a polyvinyl ether-based polymer useful as a gellant.

A polymer having a structural unit represented by the following formula (2): 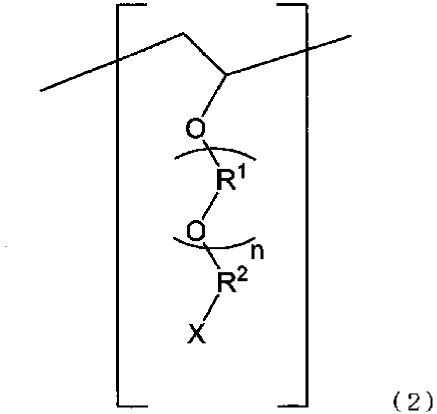 wherein
R¹ represents a linear or branched alkanediyl group having 1 to 5 carbon atoms,
R² represents a single bond or a linear or branched alkanediyl group having 1 to 5 carbon atoms,
X represents -C(=O)OH, -C(=O)O⁻M⁺, or -C(=O)O⁻ (M⁺ denotes a counter ion), and
n is an integer of 0 to 3.

## Description

### Technical Field

The present invention relates to a polymer and a production method therefor. Specifically, the present invention relates to a polymer, a gel, a gellant, a production method for a gel, and a production method for the polymer.

### Background Art

Conventionally, sodium polyacrylate has been widely used as a gellant.

Heretofore, it found that a polyvinyl ether having a polyalkylene glycol chain in a side chain, such as polydiethylene glycol monovinyl ether, is useful as a main agent or a formulated component of, for example, a coating material, an ink, an adhesive, a resin modifier, a metal recovery resin, a compatibilizer, a surfactant, a dispersant, and a binder (Patent Literature 1).

### Citation List

### Patent Literature

Patent Literature 1: JP 2017-14438 A

### Summary of Invention

### Technical Problem

However, although the polyvinyl ether can be easily produced by a radical polymerization, a gelation ability is not found therefrom.

The present invention provides a polyvinyl ether-based polymer useful as a gellant.

### Solution to Problem

The above problem has been solved by means defined in the following <1> to <9>.
<1> A polymer (hereinafter, also referred to as a polymer of the present invention) having a structural unit represented by the following formula (2) (hereinafter, also referred to as a structural unit (2)): 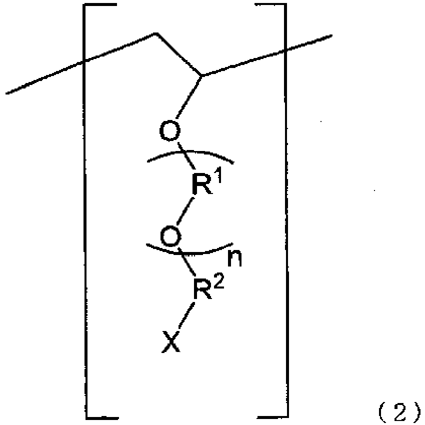
   in which
   R¹ represents a linear or branched alkanediyl group having 1 to 5 carbon atoms,
   R² represents a single bond or a linear or branched alkanediyl group having 1 to 5 carbon atoms,
   X represents -C(=O)OH, -C(=O)O⁻M⁺, or -C(=O)O⁻ (M⁺ denotes a counter ion), and
   n is an integer of 0 to 3.
<2> The polymer according to <1>, in which a content of the structural unit represented by the formula (2) is 5 to 100 mol% with respect to all structural units.
<3> The polymer according to <1>, further including a structural unit (hereinafter, also referred to as a structural unit (1)) represented by the following formula (1) : 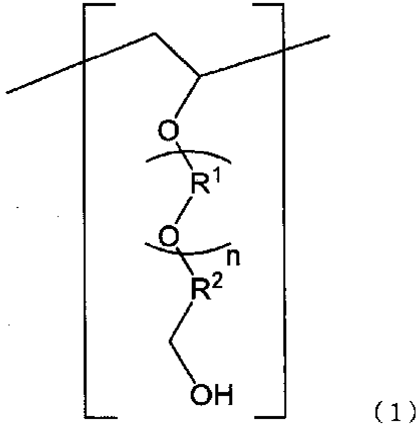 wherein R¹, R², and n have the same meaning as described above.
<4> The polymer according to <3>, in which a molar ratio between the structural unit represented by the formula (1) and the structural unit represented by the formula (2), [(1):(2)], is 1:99 to 95:5.
<5> The polymer according to <3>, in which a molar ratio between the structural unit represented by the formula (1) and the structural unit represented by the formula (2), [(1):(2)], is 30:70 to 70:30.
<6> A gel (hereinafter, also referred to as a gel of the present invention), in which a liquid substance is turned into a gel by the polymer according to any one of <1> to <5>.
<7> A gellant (hereinafter, also referred to as a gellant of the present invention) containing the polymer according to any one of <1> to <5>.
<8> A production method for a gel, including a step of turning a liquid substance into a gel using the polymer according to any one of <1> to <5> (hereinafter, also referred to as a gel production method of the present invention).
<9> A method for producing a polymer having a structural unit (2), the method including a step of oxidizing a polymer having a structural unit (1) (hereinafter, also referred to as a polymer production method of the present invention).

### Advantageous Effects of Invention

According to the polymer production method of the present invention, a polyvinyl ether-based polymer useful as a gellant can be easily produced.

Therefore, the polymer of the present invention is useful as a gellant.

### Brief Description of Drawings

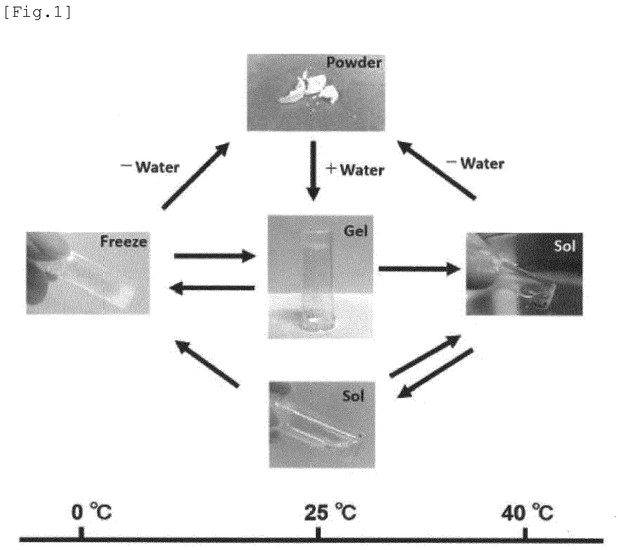

Fig. 1 is a view showing a state change of a mixture of a copolymer obtained in Example 3 and water.

### Description of Embodiments

### [Polymer production method]

The polymer production method of the present invention is a method for producing a polymer having a structural unit represented by the following formula (2), including a step of oxidizing a polymer (hereinafter, also referred to as a raw material polymer) having a structural unit represented by the following formula (1):

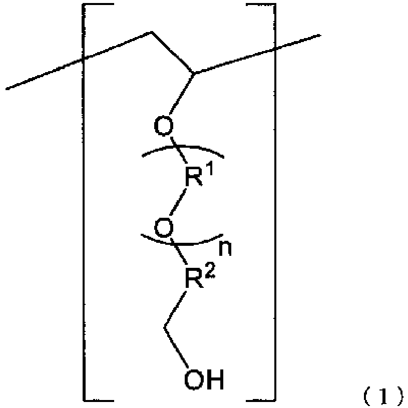

wherein
R¹ represents a linear or branched alkanediyl group having 1 to 5 carbon atoms,
R² represents a single bond or a linear or branched alkanediyl group having 1 to 5 carbon atoms, and
n is an integer of 0 to 3.

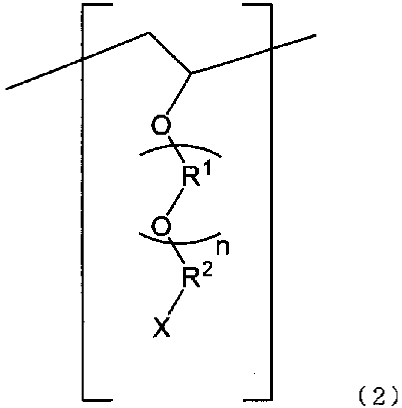

wherein
X represents -C(=O)OH, -C(=O)O⁻M⁺, or -C(=O)O⁻ (M⁺ denotes a counter ion), and
R¹, R², and n have the same meaning as described above.

### (Raw material polymer)

In the formula (1), R¹ represents a linear or branched alkanediyl group having 1 to 5 carbon atoms. R² represents a single bond or a linear or branched alkanediyl group having 1 to 5 carbon atoms, and is preferably a linear or branched alkanediyl group having 1 to 5 carbon atoms.

The number of carbon atoms in the alkanediyl group represented by R¹ and R² is preferably 1 to 4 from viewpoints of, for example, availability of raw materials and ease of production. The number of carbon atoms of the alkanediyl group represented by R¹ is more preferably 2 or 3, and particularly preferably 2. Meanwhile, the number of carbon atoms of the alkanediyl group represented by R² is more preferably 1 or 2, and particularly preferably 1.

Examples of the alkanediyl group represented by R¹ and R² include a methane-1,1-diyl group, an ethane-1,1-diyl group, an ethane-1,2-diyl group, a propane-1,1-diyl group, a propane-1,2-diyl group, a propane-1,3-diyl group, a propane-2,2-diyl group, a butane-1,2-diyl group, a butane-1,3-diyl group, a butane-1,4-diyl group, and a pentane-1,5-diyl group.

Among them, the alkanediyl group represented by R¹ is preferably an ethane-1,2-diyl group or a propane-1,2-diyl group, and more preferably an ethane-1,2-diyl group. As the alkanediyl group represented by R², a methane-1,1-diyl group and an ethane-1,2-diyl group are preferable, and a methane-1,1-diyl group is more preferable.

In formula (1), n is an integer of 0 to 3, however, is preferably an integer of 0 to 2, and particularly preferably 1, from the viewpoints of, for example, the availability of raw materials and the ease of production. In a case where n is 2 or 3, n R¹s may be the same or different.

The content of the structural unit (1) is preferably 70 to 100 mol%, more preferably 80 to 100 mol%, still more preferably 90 to 100 mol%, and particularly preferably 95 to 100 mol% with respect to total structural units of the raw material polymer. As the raw material polymer, a homopolymer formed by repeating the structural unit (1) is preferable. The raw material polymer is preferably a non-crosslinked polymer.

In the present description, the content of each structural unit in each polymer can be measured by, for example, NMR. Specifically, measurement may be performed according to a method described in the examples to be described later.

Examples of the raw material polymer include poly(2-hydroxyethyl vinyl ether), poly(3-hydroxypropyl vinyl ether), poly(propylene glycol monovinyl ether), poly(1-hydroxypropane -2-yl vinyl ether), poly(4-hydroxybutyl vinyl ether), poly(diethylene glycol monovinyl ether), poly(dipropylene glycol monovinyl ether), and poly(triethylene glycol monovinyl ether).

A number average molecular weight (Mn) of the raw material polymer is preferably 500 to 500000, and more preferably 1000 to 100000.

A weight average molecular weight (Mw) of the raw material polymer is preferably 500 to 500000, more preferably 1000 to 100000.

A molecular weight distribution (Mw/Mn) is preferably 1 to 5.

The number average molecular weight, the weight average molecular weight, and the molecular weight distribution may be measured according to the methods described in the examples to be described later.

As the raw material polymer, a commercially available product may be used, or a polymer obtained by synthesis according to a known method described in, for example, JP 2017-14438 A, may be used.

### (Oxidation step)

The raw material polymer may be oxidized using an oxidizing agent. The oxidation can be performed with reference to the known oxidation described in, for example, WO 2012/008228, Piancatelli, G.; Leonelli, F. Org. Synth. 2006, 83, 18, Cellulose volume 24, pages 4097-4101 (2017).

The oxidizing agent is roughly classified into an organic oxidizing agent and an inorganic oxidizing agent. Examples of the organic oxidizing agent include N-oxyl-based oxidizing agents such as 2,2,6,6-tetramethylpiperidine 1-oxyl and 2-azaadamantane N-oxyl, and percarboxylic acids such as peracetic acid and perbenzoic acid. Meanwhile, examples of the inorganic oxidizing agent include hydrogen peroxide, chromic acid, and pyridinium chlorochromate. One of these oxidizing agents may be used alone, or two or more kinds thereof may be used in combination.

As the oxidizing agent, such an oxidizing agent, is preferable, that is not a transition metal and thus has low toxicity, undergoes a reaction under mild conditions of about room temperature, is relatively inexpensive, and does not have explosive properties; and from a viewpoint of, for example, environmental compatibility, an organic oxidizing agent is preferable, an N-oxyl oxidizing agent is more preferable, and a piperidine N-oxyl oxidizing agent is particularly preferable.

The amount of the oxidizing agent to be used is usually 0.001 to 0.08 molar equivalents, preferably 0.002 to 0.07 molar equivalents, and more preferably 0.005 to 0.06 molar equivalents, with respect to the structural units in the raw material polymer.

In a case where the N-oxyl-based oxidizing agent is used as an oxidizing agent, it is preferable to use a reoxidizing agent together with the N-oxyl-based oxidizing agent. As the reoxidizing agent, in addition to iodobenzene diacetate, a combination of an oxoacid such as sodium hypochlorite, sodium chlorite, lithium hypochlorite, potassium hypochlorite, calcium hypochlorite, sodium bromate, lithium hypobromite, potassium hypobromite, calcium hypobromite, sodium hydrogen persulfate, sodium periodate, or periodic acid or a salt thereof (preferably a halogen oxoacid salt) and an alkali metal salt such as sodium bromide, sodium chloride, or sodium sulfate (preferably an alkali metal halide or an alkali metal salt of an inorganic acid) is preferable.

The amount of the halogen oxoacid salt used is usually 50 to 2000 molar equivalents, and preferably 100 to 500 molar equivalents, with respect to the N-oxyl-based oxidizing agent.

The amount of the alkali metal halide used is usually 1 to 300 molar equivalents, and preferably 10 to 20 molar equivalents, with respect to the N-oxyl-based oxidizing agent.

Oxidation step is preferably performed in the presence of a solvent. The type of the solvent is not particularly limited as long as the solvent does not inhibit the reaction and dissolves or disperses the raw material polymer. Examples of the solvent include aliphatic hydrocarbons such as hexane, heptane, and petroleum ether; aromatic hydrocarbons such as benzene, toluene, and xylene; nitriles such as acetonitrile, propionitrile and benzonitrile; halogenated hydrocarbons such as dichloromethane, chloroform, 1,2-dichloroethane, and carbon tetrachloride; ethers such as diethyl ether, diisopropyl ether, tetrahydrofuran, dioxane, dimethoxyethane and diethylene glycol dimethyl ether; amides such as formamide, dimethylformamide, dimethylacetamide, and hexamethylphosphoric acid triamide; sulfoxides such as dimethyl sulfoxide; esters such as ethyl formate, ethyl acetate, propyl acetate, butyl acetate, and diethyl carbonate; carboxylic acids such as acetic acid, formic acid, and propionic acid; sulfones such as sulfolane; water; and alcohol-based solvents such as methanol, ethanol, and propanol. One of these solvents may be used alone, or two or more kinds thereof may be used in combination. Among them, water is preferable from a viewpoint of solubility of the raw material polymer and the polymer after oxidation.

The amount of the solvent used is usually about 20 to 500 mass times the amount of the raw material polymer.

The reaction time in the oxidation step is not particularly limited, however, is usually about 3 minutes to 12 hours (preferably 15 to 120 minutes), and the reaction temperature in the oxidation step may be appropriately selected at a temperature equal to or lower than a boiling point of the solvent, however, is usually about 20 to 40°C.

The pH of the oxidation step is preferably in a range of 8 to 14, more preferably in the range of 10 to 11.

The polymer obtained in the oxidation step may be subjected to an ion exchange treatment. The ion exchange treatment may be performed using an acidic ion exchange resin. In a case where the ion exchange treatment is performed, a polymer having -C(=O)OH as X in the formula (2) is obtained.

The isolation of the reaction product may be performed by appropriately combining usual means such as washing, drying, and dialysis as necessary.

Furthermore, according to the polymer production method of the present invention, a polyvinyl ether-based polymer useful as a gellant can be easily produced.

Next, the polymer of the present invention that can be produced as described above will be described.

### [Polymer]

The polymer of the present invention has a structural unit represented by the following formula (2).

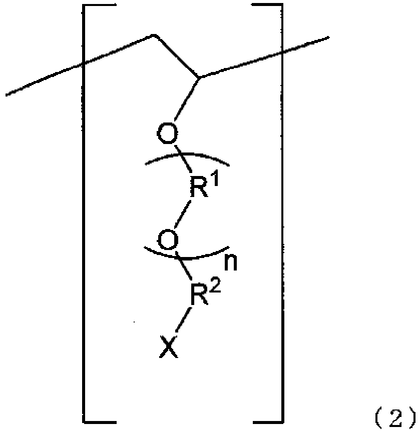

wherein
X represents -C(=O)OH, -C(=O)O⁻M⁺, or -C(=O)O⁻ (M⁺ denotes a counter ion), and
R¹, R², and n have the same meaning as described above.

Examples of the counter ion represented by M⁺ in the formula (2) include alkali metal ions such as sodium ion and potassium ion; alkaline earth metal ions such as magnesium ions and calcium ions; ammonium ion; and organic ammonium ions.

The polymer of the present invention preferably further has the structural unit (1) from a viewpoint of gelation ability. By providing the structural unit (2) and the structural unit (1) in combination, the gelation ability is improved.

In a case of having the structural units (1) and (2), an aspect of the arrangement of the structural units is not particularly limited, and the copolymer may be any of a block copolymer, a graft copolymer, a random copolymer, and an alternating copolymer.

In addition, as the polymer of the present invention, a copolymer composed of repeating the structural unit (1) and repeating the structural unit (2) is preferable. The polymer of the present invention is preferably a non-crosslinked polymer.

The content of the structural unit (2) is preferably 5 mol% or more, more preferably 10 mol% or more, still more preferably 20 mol% or more, further more preferably 30 mol% or more, and particularly preferably 40 mol% or more with respect to the total structural units of the polymer of the present invention from viewpoints of, for example, gelation ability, heat resistance, and thermal stability, and is preferably 100 mol% or less, more preferably 99 mol% or less, still more preferably 90 mol% or less, further more preferably 80 mol% or less, and particularly preferably 70 mol% or less with respect to the total structural units of the polymer of the present invention from viewpoints of, for example, gelation ability, and hydrophilic performance imparting. The specific range is preferably 5 mol% or more and 100 mol% or less, more preferably 10 mol% or more and 99 mol% or less, still more preferably 20 mol% or more and 90 mol% or less, further more preferably 30 mol% or more and 80 mol% or less, particularly preferably 40 mol% or more and 70 mol% or less with respect to the total structural units of the polymer of the present invention.

The content of the structural unit (1) is preferably 0 mol% or more, more preferably 1 mol% or more, still more preferably 10 mol% or more, further more preferably 20 mol% or more, and particularly preferably 30 mol% or more with respect to the total structural units of the polymer of the present invention from the viewpoints of, for example, the gelation ability and the hydrophilicity performance imparting, and is preferably 95 mol% or less, more preferably 90 mol% or less, still more preferably 80 mol% or less, further more preferably 70 mol% or less, and particularly preferably 60 mol% or less with respect to the total structural units of the polymer of the present invention from the viewpoints of, for example, the gelation ability, the heat resistance, and the thermal stability. The specific range is preferably 0 mol% or more and 95 mol% or less, more preferably 1 mol% or more and 90 mol% or less, still more preferably 10 mol% or more and 80 mol% or less, further more preferably 20 mol% or more and 70 mol% or less, particularly preferably 30 mol% or more and 60 mol% or less with respect to the total structural units of the polymer of the present invention.

In a case where the content of the structural unit (1) is 1 mol% or more or 10 mol% or more, the gelation ability is particularly improved. In a case where the content of the structural unit (1) is 70 mol% or less, the heat resistance and the thermal stability are particularly improved.

The molar ratio between the structural unit (1) and the structural unit (2), [(1):(2)], in the polymer of the present invention is preferably 0:100 or more, more preferably 1:99 or more, still more preferably 10:90 or more, further more preferably 20:80 or more, and particularly preferably 30:70 or more from the viewpoints of, for example, gelation ability and hydrophilicity performance imparting, and is preferably 95:5 or less, more preferably 90:10 or less, further preferably 80:20 or less, further preferably 70:30 or less, and particularly preferably 60:40 or less from the viewpoints of, for example, the gelation ability, the heat resistance, and the thermal stability. The specific range is preferably 0:100 to 95:5, more preferably 1: 99 to 90:10, still more preferably 10:90 to 80:20, further more preferably 20:80 to 70:30, and particularly preferably 30:70 to 60:40.

In a case where the molar ratio [(1):(2)] is 1:99 or more or 10:90 or more, the gelation ability is particularly improved. In a case where the molar ratio [(1):(2)] is 70:30 or less, the heat resistance and the thermal stability are particularly improved.

The number average molecular weight (Mn) of the polymer of the present invention is preferably 500 to 500000, and more preferably 1000 to 100000.

The weight average molecular weight (Mw) of the polymer of the present invention is preferably 500 to 500000, more preferably 1000 to 100000.

A molecular weight distribution (Mw/Mn) is preferably 1 to 5.

The number average molecular weight, the weight average molecular weight, and the molecular weight distribution may be measured according to the methods described in the examples to be described later.

The polymer of the present invention has an excellent gelation ability. Therefore, the polymer of the present invention is useful as a gellant.

Here, in the present description, the "gelation ability" refers to an ability to gel a liquid substance at 25°C.

Examples of the liquid substance include water and a water-soluble organic solvent. Examples of the water-soluble organic solvent include water-soluble alcohols such as methanol, ethanol, propanol, and ethylene glycol; water-soluble ethers such as tetrahydrofuran; water-soluble ketones such as acetone; water-soluble pyrrolidones such as N-methyl-2-pyrrolidone; water-soluble amides such as N,N'-dimethylformamide; water-soluble sulfoxides such as dimethyl sulfoxide; water-soluble amines such as pyridine; and water-soluble nitriles such as acetonitrile. One of these liquid substances may be used alone, or two or more kinds thereof may be used in combination.

Among them, water and a mixed solution of water and a water-soluble organic solvent are preferable.

### [Gellant]

The gellant of the present invention contains the polymer of the present invention.

The content of the polymer of the present invention is preferably 70 to 100 mass%, more preferably 80 to 100 mass%, and particularly preferably 90 to 100 mass% in the gellant of the present invention.

The gellant of the present invention may contain components other than the polymer of the present invention. Examples of such other components include preservatives such as isothiazolone, triazine, pronopol, thiabendazole, carbendazim and zinc pyrithione; preservatives such as benzoic acid, sodium benzoate, sorbic acid, sodium sorbate, potassium sorbate, sodium dehydroacetate, propionic acid, sodium propionate, thuaprisin, and paraoxybenzoic acid ester (paraben); chelating agents such as edetic acid; and surfactants. One of these other components may be used alone, or two or more kinds thereof may be used in combination.

The gellant of the present invention has an excellent gelation ability.

Therefore, the gellant of the present invention is useful as, for example, a moisture absorbent, a water absorbent, a thickener, and a slurrying agent. Specifically, the gellant is useful as, for example, sanitary materials such as diapers and napkins; pet treatment agents such as pet sheets and toilet sand; deodorant; soil water retention materials; humectant for plant cultivation; and a sealing material.

### [Gel production method]

The gel production method of the present invention includes a step of turning a liquid substance into a gel using the polymer of the present invention.

A gelation step in the gel production method of the present invention may be performed by, for example, mixing the polymer of the present invention and the liquid substance at 10 to 30°C. According to the gel production method of the present invention, a gel is obtained by such a simple operation.

The amount of the polymer used of the present invention is usually 0.1 to 40 parts by mass, preferably 0.5 to 32 parts by mass, and more preferably 1 to 10 parts by mass, based on 100 parts by mass of the liquid substance.

Then, according to the gel production method of the present invention, a gel can be easily obtained at low costs.

### [Gel]

In the gel of the present invention, a liquid substance is turned into a gel by the polymer of the present invention.

The content of the liquid substance in the gel of the present invention is preferably 60 to 99.9 mass%, more preferably 68 to 99.5 mass%, and particularly preferably 90 to 99 mass%.

The content of the polymer of the present invention is usually 0.1 to 40 parts by mass, preferably 0.5 to 32 parts by mass, and more preferably 1 to 10 parts by mass, based on 100 parts by mass of the liquid substance.

As shown in the examples to be described later, the gel of the present invention is irreversibly brought into a solution state when heated, so that disposal treatment is very simple.

### Examples

Hereinafter, the present invention will be described in detail with reference to the examples, however, the present invention is not limited to these examples.

Analysis conditions in the examples are as follows.

### (Identification and yield measurement)

The chemical structure was identified and the yield was measured by ¹H-NMR spectrum measurement (apparatus: JNM-ECX 500II manufactured by JEOL, 500 MHz, solvent: heavy water, internal standard substance: sodium 3-(trimethylsilyl)propionate-2,2,3,3-d₄) and ¹³C-NMR spectrum measurement (apparatus: JNM-ECX 500II manufactured by JEOL, 125 MHz, solvent: heavy water, internal standard substance: sodium 3-(trimethylsilyl)propionate-2,2,3,3-d₄).

### (Measurement of molecular weight)

Measurement method: GPC method, pump: CCPM II manufactured by Tosoh Corporation, autosampler: AS-8020 manufactured by Tosoh Corporation, column oven: CO-8020 manufactured by Tosoh Corporation, detector: RI-8011 manufactured by Tosoh Corporation, degaster: DG660B manufactured by GL Sciences Inc., column: TSKgelα-M manufactured by Tosoh Corporation, elution solvent: phosphate buffer (pH=7), standard substance: polyethylene oxide, measurement temperature: 40°C

### [Example 1]

Acid-PDEGV was obtained according to the following synthetic route.

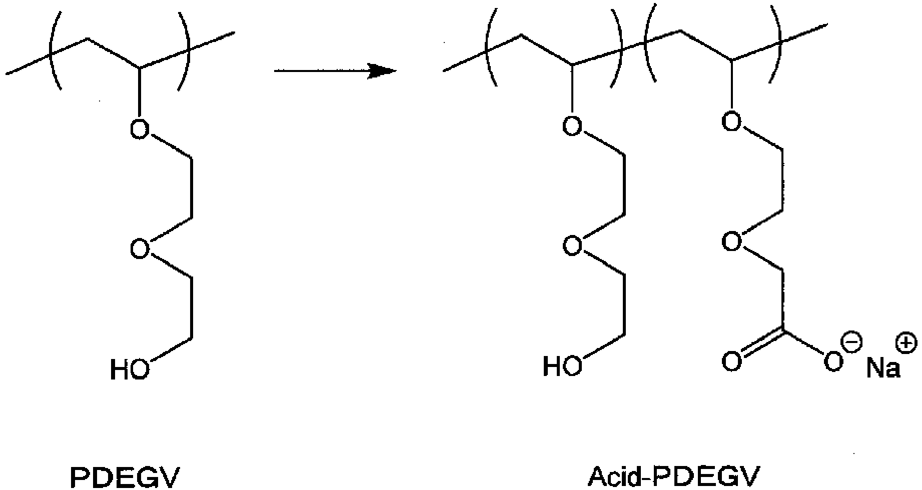

0.2 g of polydiethylene glycol monovinyl ether (Mn: 14600, Mw/Mn: 3.75 (hereinafter, also referred to as PDEGV)), 50 mL of water, 12.5 mg of 2,2,6,6-tetramethylpiperidine 1-oxyl (hereinafter, also referred to as TEMPO), and 0.125 g of NaBr were added to a 100 mL beaker. 5.6 mL of a 13 mass% aqueous NaClO solution was added to the beaker, and a 0.1 M NaOH aqueous solution was further added so that the pH was in the range of 10.5 to 10.7, and the mixture was reacted at 25°C for 1 hour. After completion of the reaction, dialysis and lyophilization were performed to obtain Acid-PDEGV.

The yield of the obtained polymer (the Acid-PDEGV), the molar ratio of the structural units [(1):(2)], the number average molecular weight and the molecular weight distribution are shown in Table 1.

### [Examples 2 to 6]

A polymer was obtained in the same manner as in Example 1 except that the use amounts of TEMPO, NaBr and NaClO aqueous solutions and the reaction time were changed to those shown in Table 1.

The yield of the obtained polymer (the Acid-PDEGV), the molar ratio of the structural units [(1):(2)], the number average molecular weight and the molecular weight distribution are shown in Table 1.

**[Table 1]**

| | TEMPO (mg) | NaBr (g) | NaClO aqueous solution (mL) | Reaction time (min) | Yield (%) | Molar ratio [(1):(2)] | Mn | Mw/Mn |
|---|---|---|---|---|---|---|---|---|
| Example 1 | 12.5 | 0.125 | 5.6 | 60 | 100 | 0:100 | 29900 | 2.99 |
| Example 2 | 0.8 | 0.008 | 1.2 | 30 | 8.0 | 92:8 | 23200 | 2.11 |
| Example 3 | 0.8 | 0.008 | 1.2 | 60 | 27.8 | 72:28 | 24700 | 3.37 |
| Example 4 | 1.6 | 0.016 | 2.4 | 60 | 50.1 | 50:50 | 26600 | 3.61 |
| Example 5 | 3.2 | 0.032 | 4.7 | 60 | 71.9 | 28:72 | 27100 | 3.23 |
| Example 6 | 12.5 | 0.125 | 5.6 | 50 | 97.8 | 2:98 | 28600 | 3.19 |

### [Example 7]

0.1 g of the copolymer (powder) obtained in Example 1 was added to 9.9 g of water to obtain a 1 mass% aqueous solution. This aqueous solution was dialyzed, and then passed through a column having a diameter of 1 cm filled with 10 g of an acidic ion exchange resin (Amberlite 200CT manufactured by ORGANO CORPORATION). It was confirmed by ¹H-NMR that -COO⁻Na⁺ of a copolymer side chain was converted to -COOH.

### [Test Example 1 Gelation ability]

When 5 parts by mass of the copolymer (powder) obtained in Example 3 was added to 95 parts by mass of water at 25°C, gelation occurred. When viscoelasticity of the gel was measured under the following conditions, the storage elastic modulus (G') and the loss elastic modulus (G") are 33.2 Pa and 2.36 Pa at an angular frequency of 1 radian/sec, respectively, and G' exceeded G".

### (Viscoelasticity measurement conditions)

Apparatus: Modular Compact Rheometer MCR 302 manufactured by Anton Paar GmbH
Cone plate: CP50-1 (diameter of 49.979 mm, angle of 0.998°)
Strain: 1%
Angular frequency: 0.1 to 100 radians/sec

Next, the gel was heated to 40°C to form a solution. The viscoelasticity was G": 1.01 Pa, G': 0.664 Pa at an angular frequency of 1 radian/sec, which means G' is smaller than G". This liquid material did not become a gel even in a case where the temperature was returned from 40°C to 25°C. However, in a case where the mixture was frozen at 0°C and then returned to 25°C, the mixture became gel-like.

In addition, a copolymer (powder) could be obtained by dehydrating the mixture in the solution state at 40°C and the mixture in the frozen solution state at 0°C through drying.

The results of Test Example 1 are shown in Fig. 1.

### [Test Example 2 Gelation ability]

For each polymer shown in Table 2, a gelation concentration was determined by a test tube inversion method. Here, a copolymer (powder) was put into a 10 mL vial, a predetermined amount of water was added thereto at 25°C, and the vial was allowed to stand for 1 minute. Thereafter, the test tube was slowly overturned by 180 degrees, and a gel was obtained by visually recognizing that the gel was not deformed or broken. It can be said that the smaller the value of the concentration of gelation (the gelation concentration), the better the gelation ability. The results of Test Example 2 are shown in Table 2.

**[Table 2]**

| Polymer | Gelation concentration (mass%) |
|---|---|
| PDEGV | >40.0 (not turned into gel) |
| Example 1 | 32.0 |
| Example 2 | 2.2 |
| Example 3 | 2.0 |
| Example 4 | 1.5 |
| Example 5 | 4.4 |
| Example 6 | 10.3 |

### [Test Example 3]

Each polymer shown in Table 3 was subjected to thermogravimetric analysis and differential scanning calorimetry. The thermogravimetric analysis was performed by raising the temperature at 20°C/min using DSC8231 manufactured by Rigaku Corporation. In addition, the differential scanning calorimetry was performed by raising the temperature at 10°C/min using TG-DTA8122 manufactured by Rigaku Corporation. The results of Test Example 3 are shown in Table 3.

**[Table 3]**

| Polymer | T_{d5} (°C) | Tg (°C) |
|---|---|---|
| PDEGV | 310 | 11 |
| Example 1 | 297 | 107 |
| Example 3 | 310 | 12 |
| Example 4 | 311 | 54 |

## Claims

1. A polymer having a structural unit represented by the following formula (2): 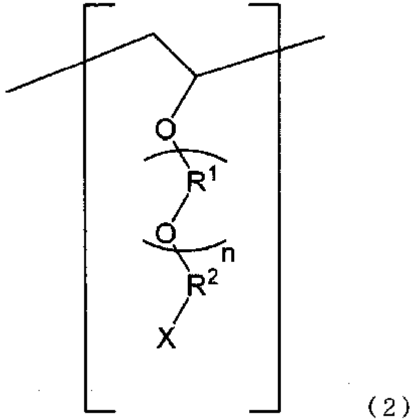 wherein
R¹ represents a linear or branched alkanediyl group having 1 to 5 carbon atoms,
R² represents a single bond or a linear or branched alkanediyl group having 1 to 5 carbon atoms,
X represents -C(=O)OH, -C(=O)O⁻M⁺, or -C(=O)O⁻ (M⁺ denotes a counter ion), and
n is an integer of 0 to 3.

2. The polymer according to claim 1, wherein a content of the structural unit represented by the formula (2) is 5 to 100 mol% with respect to all structural units.

3. The polymer according to claim 1, further comprising a structural unit represented by the following formula (1): 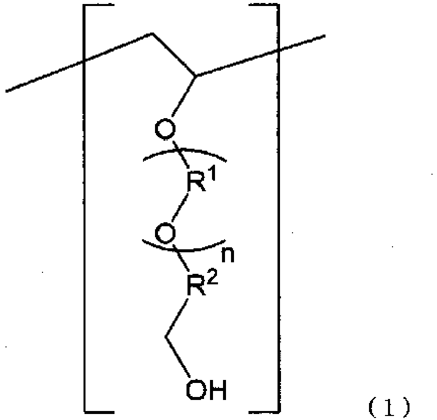 wherein R¹, R², and n have the same meaning as described above.

4. The polymer according to claim 3, wherein a molar ratio between the structural unit represented by the formula (1) and the structural unit represented by the formula (2), [(1):(2)], is 1:99 to 95:5.

5. The polymer according to claim 3, wherein a molar ratio between the structural unit represented by the formula (1) and the structural unit represented by the formula (2), [(1):(2)], is 30:70 to 70:30.

6. A gel, wherein a liquid substance is turned into a gel by the polymer according to any one of claims 1 to 5.

7. A gellant comprising the polymer according to any one of claims 1 to 5.

8. A production method for a gel, comprising a step of turning a liquid substance into a gel using the polymer according to any one of claims 1 to 5.

9. A method for producing a polymer having a structural unit represented by the following formula (2), the method comprising a step of oxidizing a polymer having a structural unit represented by the following formula (1): 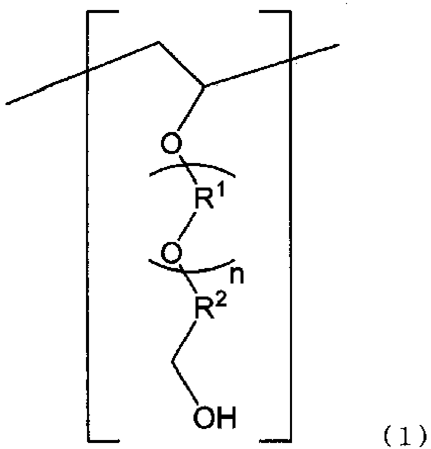 wherein
R¹ represents a linear or branched alkanediyl group having 1 to 5 carbon atoms,
R² represents a single bond or a linear or branched alkanediyl group having 1 to 5 carbon atoms, and
n is an integer of 0 to 3; 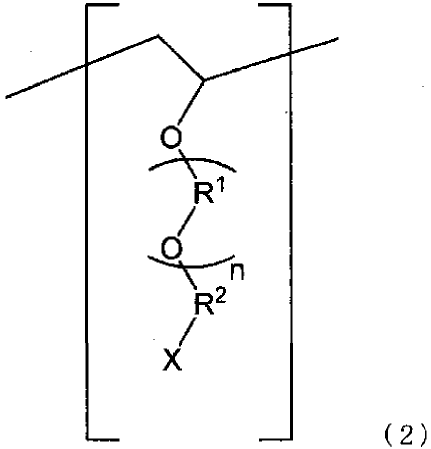
wherein
X represents -C(=O)OH, -C(=O)O⁻M⁺, or -C(=O)O⁻ (M⁺ denotes a counter ion), and
R¹, R², and n have the same meaning as described above.
